(19) Europäisches Patentamt
European Patent Office
Office européen des brevets

(11) EP 2 103 654 B1

(12) **EUROPEAN PATENT SPECIFICATION**

(45) Date of publication and mention of the grant of the patent:
**11.09.2013 Bulletin 2013/37**

(21) Application number: **07849883.9**

(22) Date of filing: **25.12.2007**

(51) Int Cl.:
***C08L 69/00*** *(2006.01)* ***C08K 5/42*** *(2006.01)*

(86) International application number:
**PCT/JP2007/001464**

(87) International publication number:
**WO 2008/084518 (17.07.2008 Gazette 2008/29)**

(54) **USE OF A NON-HALOGEN-BASED AROMATIC SULFONIC ACID METAL SALT COMPOUND FOR FLAME-RETARDING AN AROMATIC POLYCARBONATE RESIN COMPOSITION**

VERWENDUNG EINES NICHT-HALOGEN-BASIERTEN METALLSALZES EINER AROMATISCHEN SULFONSÄURE ALS FLAMMSCHUTZMITTEL FÜR EINE AROMATISCHES POLYCARBONATHARZ ENTHALTENDE ZUSAMMENSETZUNG

UTILISATION D'UN ACIDE SULFONIQUE AROMATIQUE NON HALOGÉNÉ EN TANT QU'AGENT IGNIFUGE DANS UN COMPOSITION DE RÉSINE DE POLYCARBONATE AROMATIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.01.2007 JP 2007001777**

(43) Date of publication of application:
**23.09.2009 Bulletin 2009/39**

(73) Proprietor: **MITSUBISHI ENGINEERING-PLASTICS CORPORATION**
**Tokyo 105-0021 (JP)**

(72) Inventors:
- **MONDEN, Toshiki**
**Hiratsuka-shi**
**Kanagawa 254-0016 (JP)**
- **NAKANO, Hiroshi**
**Hiratsuka-shi**
**Kanagawa 254-0016 (JP)**

(74) Representative: **HOFFMANN EITLE**
**Patent- und Rechtsanwälte**
**Arabellastrasse 4**
**81925 München (DE)**

(56) References cited:
**JP-A- 06 306 268**
**JP-A- 2003 530 477**
**JP-A- 2004 107 372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to the use of a non-halogen-based aromatic sulfonic acid metal salt compound for flame-retarding an aromatic polycarbonate resin composition.

### BACKGROUND ART

Aromatic polycarbonate resins have been extensively used in various applications such as automobile materials, materials for electric and electronic equipments and building materials because they are excellent in heat resistance, mechanical properties and electrical properties. In particular, aromatic polycarbonate resin compositions to which a good flame-retardancy is imparted, have been used as materials of parts for OA and information equipments such as computers, note book-type computers, cellular phones, printers and copying machines.

As the method for imparting a flame retardancy to the aromatic polycarbonate resins, it has been attempted to use a halogen-based, phosphorus-based, silicone-based, inorganic metal salt-based or organic metal salt-based flame retardant as well as a flame-retarding assistant. In recent years, studies have been made to develop a number of organic metal salt compounds capable of imparting a flame retardancy to the aromatic polycarbonate resins without significant damage to their inherent properties such as mechanical properties, e.g., impact resistance, heat resistance and electrical properties even when added thereto in a relatively small amount.

As the techniques for imparting a flame retardancy to the aromatic polycarbonate resins by using the organic metal salt compounds, there has been proposed, for example, the method utilizing perfluoroalkyl sulfonic acid metal salts having 4 to 8 carbon atoms (for example, refer to Patent Document 1). However, although the perfluoroalkyl sulfonic acid metal salts have an excellent flame-retarding effect, it has been pointed out that some of the perfluoroalkyl sulfonic acid metal salts tend to cause accumulation of the perfluoroalkyl chain in vivo. Also, in view of recent concern about environmental problems, there is a strong demand for the techniques capable of imparting a flame retardancy to the aromatic polycarbonate resins by using a non-halogen-based organic metal salt compound comprising none of halogen atoms such as chlorine, bromine and fluorine in a molecule thereof.

On the other hand, as the techniques for imparting a flame retardancy to the aromatic polycarbonate resins by using such a non-halogen-based organic metal salt compound, there have been proposed the method of adding a non-halogen-based aromatic sulfonic acid sodium salt to the resins (for example, refer to Patent Document 2), and the method of adding a non-halogen-based aromatic sulfonic acid potassium salt to the resins (for example, refer to Patent Document 3).

In these methods, although the aromatic polycarbonate resins can be imparted with a good flame retardancy by adding the non-halogen-based aromatic sulfonic acid sodium salt or potassium salt thereto, the resulting resin compositions tend to be deteriorated in excellent inherent properties of aromatic polycarbonate resins such as transparency and hue as well as wet-heat hue stability, thereby causing such a problem that the resins suffer from considerable deterioration in hue when subjected to a long-term environmental test.

On the other hand, there have been proposed the method of blending a perfluoroalkyl cesium salt in an aromatic polycarbonate resin to produce an aromatic polycarbonate resin composition having good transparency and flame retardancy (for example, refer to Patent Document 4), and the method of blending cesium dodecylbenzenesulfonate to an aromatic polycarbonate resin to produce an antistatic aromatic polycarbonate resin composition having an excellent transparency (for example, refer to Patent Document 5).

However, among the thus produced aromatic polycarbonate resin compositions, the halogen element- containing product still has the problem that it can be used only in the limited applications owing to the risk of accumulation thereof in vivo as well as consideration of environmental problems as described above. Further, even when using the non- halogen- based aromatic sulfonic acid metal salt, the resulting aromatic polycarbonate resin composition may fail to exhibit both a good flame retardancy and a good hue and, therefore, tends to be unsatisfactory in balance between properties thereof.

In addition, even when adding these additives, the resulting resin compositions still tend to be limited in their use or applications owing to shapes or molding conditions of a resin molded product produced therefrom. More specifically, when the resin compositions are gradually cooled (subjected to slow cooling) by prolonging a mold cooling time after injection molding as compared to that used ordinarily, for the purpose of suppressing occurrence of "sink mark" on a resin molded product having a specific shape which is produced from the compositions, for example, a molded product partially having a thick wall portion, or for the purpose of obtaining a resin molded product having a good surface appearance from the compositions, there tends to occur such a critical problem that the resulting resin molded product suffers from white turbidity (deteriorated resistance to white turbidity upon slow cooling).

The above-described critical problem may also occur when the aromatic polycarbonate resin compositions are

extrusion-molded for obtaining a resin molded product such as a film and a thick sheet member in which a thick central portion of the molded product suffers from white turbidity owing to slow cooling, thereby causing considerable deterioration in transparency of the aromatic polycarbonate resin compositions.

Patent Document 1: Japanese Patent Application Laid-open (KOKAI) No. 47-40445
Patent Document 2: Japanese Patent Application Laid-open (KOKAI) No. 2000-169696
Patent Document 3: Japanese Patent Application Laid-open (KOKAI) No. 2001-181493
Patent Document 4: Japanese Patent Application Laid-open (KOKAI) No. 6-306268
Patent Document 5: Japanese Patent Application Laid-open (KOKAI) No. 2004-107372

## DISCLOSURE OF THE INVENTION

## PROBLEM TO BE SOLVED BY THE INVENTION

As described above, the materials used in the applications needing a good flame retardancy, in particular, some of materials for electric and electronic equipments or sheet materials, are required to have a high transparency and a good hue from the viewpoints of their optical characteristics and design property. However, the methods using the conventional flame retardants are unsatisfactory to meet these requirements. Thus, the aromatic polycarbonate resin compositions which not only exhibit a less burden on environment but also are excellent in all of properties including flame retardancy, transparency, hue, wet-heat hue stability, etc., and further have no limitation to molding conditions or shapes of a molded product produced therefrom, have not been obtained until now.

An object of the present invention is to provide an aromatic polycarbonate resin composition which has excellent mechanical, thermal and electrical properties inherent to aromatic polycarbonate resins, is prevented from suffering from occurrence of turbidity, and exhibits not only excellent transparency and hue as well as a sufficient flame retardancy, but also an excellent wet-heat hue stability, and further has no limitation to production methods thereof; and a resin molded product obtained by molding the resin composition, in particular, a transparent sheet member.

## MEANS FOR SOLVING THE PROBLEM

In view of the above conventional problems, the present inventors have conducted earnest study on a blended mixture of an aromatic polycarbonate resin and a non-halogen-based aromatic sulfonic acid metal salt having a less burden on environment to determine the relationship between an organic skeleton of the non-halogen-based aromatic sulfonic acid metal salt added or a kind of the metal salt, and a frame retardancy, transparency, hue or wet-heat stability of the resin composition.

As a result, it has been unexpectedly found that when using a metal salt compound obtained from an aromatic sulfonic acid having a specific number of carbon atoms (specifically, whose aromatic ring is unsubstituted or has a substituent group having a relatively small number of carbon atoms) and a specific alkali metal, it is possible to obtain a flame-retardant aromatic polycarbonate resin composition which not only maintains good transparency, hue and wet-heat hue stability inherent to aromatic polycarbonate resins but also simultaneously exhibits an excellent flame retardancy.

In addition, it has been found that upon producing a resin molded product by molding the flame-retardant aromatic polycarbonate resin composition, the resin composition is also excellent in resistance to white turbidity due to slow cooling when subjected to injection molding or extrusion molding. The present invention has been attained on the basis of the above finding.

That is, in an aspect of the present invention, there is provided the use of a non-halogen-based aromatic sulfonic acid metal salt compound represented by the following formula (1) :

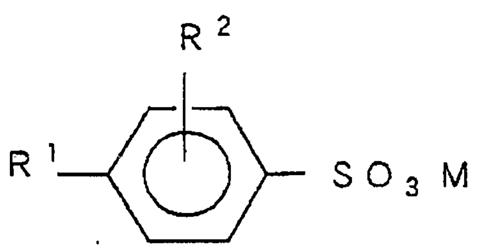

(1)

wherein $R^1$ is a hydrogen atom or an alkyl group having 1 to 10 carbon atoms; $R^2$ is a hydrogen atom, an alkyl group having 1 to 7 carbon atoms, an arylalkyl group having 6 to 20 carbon atoms or an aryl group having 5 to 15 carbon

atoms; and M is rubidium (Rb), cesium (Cs) or francium (Fr),
for flame-retarding an aromatic polycarbonate resin composition, wherein 0.001 to 0.5 parts by weight of the non-halogen-based aromatic sulfonic acid metal salt compound are added to 100 parts by weight of an aromatic polycarbonate resin.

EFFECT OF THE INVENTION

The aromatic polycarbonate resin composition is a polycarbonate resin composition which is excellent in various properties such as flame retardancy, transparency, hue and wet-heat hue stability as well as in balance between these properties. It is expected that the aromatic polycarbonate resin composition having the above-described advantages according to the present invention can be used in various extensive applications.

For example, the aromatic polycarbonate resin composition can be usefully used in various applications such as electric and electronic equipments or parts thereof, OA equipments, information terminal equipments, mechanical parts, domestic appliances, vehicle parts, building members, various containers, leisure goods, sundries, various illumination equipments, etc. In particular, it is expected that the aromatic polycarbonate resin composition can also be applied to housing members or cover members for electric and electronic equipments, OA equipments, information terminal equipments and domestic appliances, and exterior parts, outside plate parts and interior parts for vehicles.

Specific examples of the housing members and cover members for electric and electronic equipments, OA equipments, information terminal equipments and domestic appliances include housings, covers, keyboards, buttons and switch parts for displays of personal computers, game equipments or televisions, printers, copying machines, scanners, facsimiles, electronic pocket books or PDA, electronic table calculators, electronic dictionaries, cameras, video cameras, cellular phones, driving devices or readers for recording media, mouse, ten keys, CD players, MD players, potable radios and audio players.

Specific examples of the exterior parts, outside plate parts and interior parts for vehicles include head lamps, helmet shields, inner door handles, center panels, instrumental panels, console boxes, luggage floor boards, housings of displays for car navigation or the like, vehicular room lamps, etc. The vehicles may involve not only four-wheel vehicles such as so-called cars, but also motor bicycles, special kind vehicles for agriculture or civil engineering, and railroad vehicles.

PREFERRED EMBODIMENTS FOR CARRYING OUT THE INVENTION

The present invention is described in detail below. Meanwhile, in the present specification, the "group" contained in various compounds is intended to mean both substituted and unsubstituted groups, unless departing from the scope of the present invention.

<Aromatic polycarbonate resin>

The aromatic polycarbonate resin used in the present invention is a linear or branched thermoplastic aromatic polycarbonate in the form of a polymer or copolymer which is obtained, for example, by reacting an aromatic dihydroxy compound and a carbonate precursor, or by reacting these compounds with a small amount of a polyhydroxy compound, etc.

The aromatic polycarbonate resin used in the present invention is not particularly limited, and there may be used any conventionally known optional aromatic polycarbonate resins. The process for producing the aromatic polycarbonate resin may also be optional, and the aromatic polycarbonate resin may be produced by any conventionally known optional processes. Examples of the production process of the aromatic polycarbonate resin include an interfacial polymerization method, a melting transesterification method, a pyridine method, a ring-opening polymerization method of cyclic carbonate compounds, and a solid-state transesterification method of prepolymers.

Examples of the aromatic dihydroxy compound used as a raw material in the process for producing these aromatic polycarbonate resins include bis (hydroxyaryl) alkanes such as 2, 2- bis (4- hydroxyphenyl) propane (= bisphenol A) , 2, 2- bis (3, 5- dibromo- 4- hydroxyphenyl) propane (= tetrabromobisphenol A) , bis (4- hydroxyphenyl) methane, 1, 1- bis (4- hydroxyphenyl) ethane, 2, 2- bis (4- hydroxyphenyl) butane, 2, 2- bis (4- hydroxyphenyl) octane, 2, 2- bis (4- hydroxy- 3- methylphenyl) propane, 1, 1- bis (3- tert- butyl- 4- hydroxyphenyl) propane, 2, 2- bis (4- hydroxy- 3, 5- dimethylphenyl) propane, 2, 2- bis (3- bromo- 4- hydroxyphenyl) propane, 2, 2- bis (3, 5- dichloro- 4- hydroxyphenyl) propane, 2, 2- bis (3- phenyl- 4- hydroxyphenyl) propane, 2, 2- bis (3- cyclohexyl- 4- hydroxyphenyl) propane, 1, 1- bis (4- hydroxyphenyl)- 1- phenylethane, bis (4- hydroxyphenyl) diphenylmethane, 2, 2- bis (4- hydroxyphenyl)- 1, 1, 1- trichloropropane, 2, 2- bis (4- hydroxyphenyl)- 1, 1, 1, 3, 3, 3- hexachloropropane and 2, 2- bis (4- hydroxyphenyl)- 1, 1, 1, 3, 3, 3- hexafluoropropane; bis (hydroxyaryl) cycloalkanes such as 1, 1- bis (4- hydroxyphenyl) cyclopentane, 1, 1- bis (4- hydroxyphenyl) cyclohexane and 1, 1- bis (4- hydroxyphenyl)- 3, 3, 5- trimethylcyclohexane; bisphenols having a cardo structure such as 9, 9- bis (4- hydroxyphenyl) fluorene and 9, 9- bis (4- hydroxy- 3- methylphenyl) fluorene;

dihydroxydiaryl ethers such as 4, 4'- dihydroxydiphenyl ether and 4, 4'- dihydroxy- 3, 3'- dimethyldiphenyl ether; dihydroxydiaryl sulfides such as 4, 4'- dihydroxydiphenyl sulfide and 4, 4'- dihydroxy- 3, 3'- dimethyldiphenyl sulfide; dihydroxydiaryl sulfoxides such as 4, 4'- dihydroxydiphenyl sulfoxide and 4, 4'- dihydroxy- 3, 3'- dimethyldiphenyl sulfoxide; dihydroxydiaryl sulfones such as 4, 4'- dihydroxydiphenyl sulfone and 4, 4'- dihydroxy- 3, 3'- dimethyldiphenyl sulfone; hydroquinone; resorcin; and 4, 4'- dihydroxydiphenyl.

Among the above aromatic dihydroxy compounds, preferred are bis (4- hydroxyphenyl) alkanes, and more preferred is 2, 2- bis (4- hydroxyphenyl) propane [= bisphenol A] from the viewpoint of a good impact resistance of the resultant resin composition. These aromatic dihydroxy compounds may be used in combination of any two or more thereof at any optional proportion.

Examples of the carbonate precursor to be reacted with the aromatic dihydroxy compound include carbonyl halides, carbonic acid esters and haloformates. Specific examples of the carbonate precursor include phosgene; diaryl carbonates such as diphenyl carbonate and ditolyl carbonate; dialkyl carbonates such as dimethyl carbonate and diethyl carbonate; and dihaloformates of dihydric phenols. These carbonate precursors may also be used in combination of any two or more thereof at any optional proportion.

Next, the processes for producing the aromatic polycarbonate resin used in the present invention are described. Among the processes of producing the aromatic polycarbonate resin, the production process using an interfacial polymerization method is first explained. In the polymerization reaction of the production process, the aromatic dihydroxy compound is first reacted with phosgene in the presence of an organic solvent inert to the reaction and an alkali aqueous solution while maintaining the reaction system at a pH of usually not less than 9, if required, using a molecular weight controller (end capping agent) and an antioxidant for preventing oxidation of the aromatic dihydroxy compound, and then a polymerization catalyst such as a tertiary amine or a quaternary ammonium salt is added to the reaction system to conduct an interfacial polymerization therebetween, thereby obtaining a polycarbonate.

The time at which the molecular weight controller is added is not particularly limited, and the molecular weight controller may be added at any time between the reaction with phosgene and initiation of the polymerization reaction without particular limitations. Meanwhile, the reaction temperature is, for example, 0 to 40°C, and the reaction time is, for example, from several minutes (for example, 10 min) to several hours (for example, 6 hr).

Examples of the organic solvent inert to the reaction include chlorinated hydrocarbons such as dichloromethane, 1, 2- dichloroethane, chloroform, monochlorobenzene and dichlorobenzene; and aromatic hydrocarbons such as benzene, toluene and xylene. Examples of the alkali compound used for preparing the aqueous alkali solution include hydroxides of alkali metals such as sodium hydroxide and potassium hydroxide.

Examples of the molecular weight controller include compounds comprising a monovalent phenolic hydroxyl group. Specific examples of the compounds comprising a monovalent phenolic hydroxyl group include m-methyl phenol, p-methyl phenol, m-propyl phenol, p-propyl phenol, p-tert-butyl phenol and p-long chain alkyl-substituted phenols. The amount of the molecular weight controller used is preferably 50 to 0.5 mol and more preferably 30 to 1 mol on the basis of 100 mol of the aromatic dihydroxy compound.

Examples of the polymerization catalyst include tertiary amines such as trimethylamine, triethylamine, tributylamine, tripropylamine, trihexylamine and pyridine; and quaternary ammonium salts such as trimethylbenzyl ammonium chloride, tetramethyl ammonium chloride and triethylbenzyl ammonium chloride.

Next, the production process using a melting transesterification method is explained. The polymerization reaction of the production process may be conducted, for example, by subjecting a carbonic diester and an aromatic dihydroxy compound to transesterification reaction. Examples of the carbonic diester include dialkyl carbonate compounds such as dimethyl carbonate, diethyl carbonate and di- tert- butyl carbonate; diphenyl carbonate; and substituted diphenyl carbonates such as ditolyl carbonate. Among these carbonic diesters, preferred are diphenyl carbonate and substituted diphenyl carbonates, and more preferred is diphenyl carbonate.

Also, the amount of an end hydroxyl group contained in the aromatic polycarbonate resin used in the present invention has a large influence on thermal stability, hydrolysis stability and color tone thereof, and, therefore, may be appropriately controlled by conventionally known optional methods. In the case of the melting transesterification reaction, the mixing ratio between the carbonic diester and the aromatic dihydroxy compound as well as the vacuum degree used upon the transesterification reaction are usually controlled to obtain an aromatic polycarbonate having a desired molecular weight in which the amount of the end hydroxyl group is desirably adjusted.

In the melting transesterification reaction, the carbonate diester is usually used in not less than an equimolar amount and preferably in an amount of 1.01 to 1.30 mol on the basis of 1 mol of the aromatic dihydroxy compound. In order to positively control the amount of the end hydroxyl group, there may be used such a method in which an end capping agent is separately added upon the reaction. Examples of the end capping agent include monohydric phenols, monovalent carboxylic acids and carbonic diesters.

When producing the polycarbonates by the melting transesterification method, the reaction is usually conducted in the presence of a transesterification catalyst. The transesterification catalyst used in the reaction may be suitably selected from any conventionally known optional catalysts, and is preferably an alkali metal compound and/or an alkali

earth metal compound. The transesterification catalyst may be used in combination with a basic compound as an auxiliary component such as a basic boron compound, a basic phosphorus compound, a basic ammonium compound and an amine-based compound.

The transesterification reaction using the above raw materials may be usually conducted at a temperature of 100 to 320°C, and then the transesterification reaction product may be subjected to melt-polycondensation reaction under reduced pressure finally reaching not more than 2 mm Hg, while removing by-products such as aromatic hydroxy compounds from the reaction mixture.

The melt-polycondensation may be conducted by either a batch method or a continuous method, and is preferably conducted by a continuous method from the viewpoints of a good stability, etc., of the aromatic polycarbonate resin used in the present invention and the resultant resin composition of the present invention. Examples of the preferred catalyst deactivator used in the melting transesterification method include compounds capable of neutralizing the transesterification catalyst, for example, sulfur-containing acid compounds and derivatives formed therefrom.

Such a compound capable of neutralizing the transesterification catalyst is added in an amount of usually 0.5 to 10 equivalents and preferably 1 to 5 equivalents on the basis of the alkali metal contained in the catalyst, and further usually 1 to 100 ppm and preferably 1 to 20 ppm on the basis of the polycarbonate.

The molecular weight of the aromatic polycarbonate resin used in the present invention may be optionally selected and determined, and is controlled such that the viscosity-average molecular weight [Mv] calculated from a solution viscosity thereof is preferably in the range of 10,000 to 40,000. The aromatic polycarbonate having a viscosity-average molecular weight of not less than 10,000 tends to be further improved in mechanical strength, and can be therefore more suitably used in the applications requiring a higher mechanical strength. Whereas, the aromatic polycarbonate having a viscosity-average molecular weight of not more than 40,000 tends to be more effectively prevented from undergoing deterioration in fluidity, and is, therefore, more preferred from the viewpoint of facilitated molding process.

The viscosity-average molecular weight of the aromatic polycarbonate resin is more preferably 16,000 to 40,000 and still more preferably 18,000 to 30,000. Also, two or more kinds of aromatic polycarbonate resins that are different in viscosity-average molecular weight from each other may be used in the form of a mixture thereof. In this case, the above aromatic polycarbonate resin may also be mixed with those aromatic polycarbonate resins whose viscosity-average molecular weight is out of the above-specified range.

The viscosity-average molecular weight [Mv] as used herein means the value calculated from an intrinsic viscosity [η] (unit: dL/g) as measured at 20°C in methylene chloride as a solvent using an Ubbellohde viscometer, according to the Schnell's viscosity formula, i.e., $\eta = 1.23 \times 10^{-4} M^{0,83}$ wherein the intrinsic viscosity [η] is the value calculated from a specific viscosity [$\eta_{sp}$] as measured at each solution concentration [C] (g/dL) according to the following formula:

$$\eta = \lim_{c \to 0} \eta_{sp}/C.$$

When the aromatic polycarbonate resin used in the present invention is in the form of a branched polycarbonate, the process for producing the branched polycarbonate is not particularly limited, and the branched polycarbonate may be produced by any conventionally known optional method. For example, as described in Japanese Patent Application Laid- open (KOKAI) Nos. 8- 259687 (1996) and 8- 245782 (1996) , an aromatic dihydroxy compound and a carbonic diester may be reacted with each other by a melting method (transesterification method) while suitably selecting conditions of a catalyst used or production conditions, thereby obtaining a branched aromatic polycarbonate resin which has a high structural viscosity index and is excellent in hydrolysis stability, without using any branching agent.

As an alternative method for production of the branched carbonate, there may be used the method of copolymerizing the aromatic dihydroxy compound and the carbonic diester as the raw materials of the above aromatic polycarbonate resin with a trifunctional or higher polyfunctional aromatic compound by a phosgene method or a melting method (transesterification method).

Examples of the trifunctional or higher polyfunctional aromatic compound include polyhydroxy compounds such as phloroglucin, 4, 6- dimethyl- 2, 4, 6- tri (4- hydroxyphenyl) heptene- 2, 4, 6- dimethyl- 2, 4, 6- tri (4- hydroxyphenyl) heptane, 2, 6- dimethyl- 2, 4, 6- tri (4- hydroxyphenyl) heptene- 3, 1, 3, 5- tri (4- hydroxyphenyl) benzene and 1, 1, 1- tri (4- hydroxyphenyl) ethane; 3, 3- bis (4- hydroxyaryl) oxyindole (= isatin bisphenol) ; 5- chloroisatin; 5, 7- dichloroisatin; and 5- bromoisatin. Among these polyfunctional aromatic compounds, preferred is 1, 1, 1- tri (4- hydroxyphenyl) ethane.

The polyfunctional aromatic compound may be used by replacing a part of the above aromatic dihydroxy compound therewith. The amount of the polyhydroxy aromatic compound used is usually 0.01 to 10 mol% and preferably 0.1 to 3 mol% on the basis of the aromatic dihydroxy compound.

Examples of the branched structure of the aromatic polycarbonate resin obtained by the melting method (transesterification method) include the structures represented by the following general formulae (2) to (5):

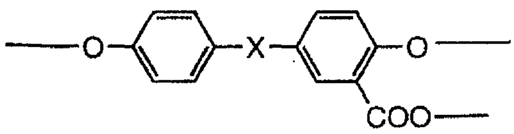

(2)

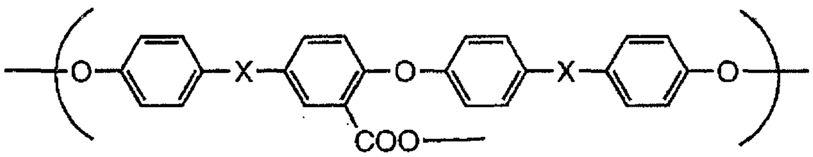

(3)

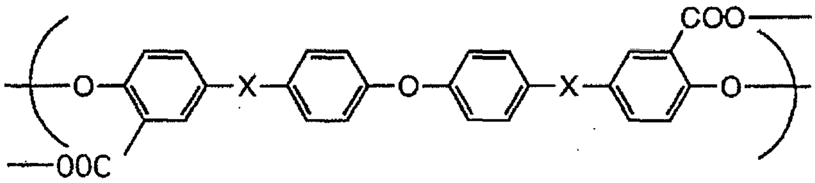

(4)

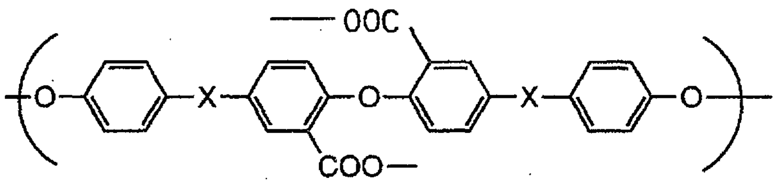

(5)

In the above general formulae (2) to (5), X is a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, or a divalent group selected from the group consisting of -O-, -S-, -CO-, -SO- and $-SO_2-$.

The branched aromatic polycarbonate resin used in the present invention usually has a structural viscosity index N of not less than 1.2. The use of such a branched aromatic polycarbonate resin is preferred because the resin serves for improving an anti-dripping effect of the resin, in particular, the effect of preventing such a fired molten resin from being dripped. The "structural viscosity index N" as used herein is the value as described in publications, for example, Shigeharu ONOGI "Rheology for Chemists", pp. 15-16, etc.

The end hydroxyl group concentration of the aromatic polycarbonate resin used in the present invention may be optional and may be appropriately selected and determined. However, the upper limit of the end hydroxyl group concentration of the aromatic polycarbonate resin is usually 1000 ppm, preferably 800 ppm and more preferably 600 ppm. The lower limit of the end hydroxyl group concentration of the aromatic polycarbonate resin, in particular, such an aromatic polycarbonate resin produced by a transesterification method, is usually 10 ppm, preferably 30 ppm and more preferably 40 ppm.

When the end hydroxyl group concentration of the aromatic polycarbonate resin is controlled to not less than 10 ppm, the aromatic polycarbonate resin is prevented from undergoing reduction in a molecular weight thereof, resulting in such an advantage that the obtained resin composition is further enhanced in mechanical properties. Also, when the end hydroxyl group concentration of the aromatic polycarbonate resin is controlled to not more than 1000 ppm, the obtained resin composition tends to be further enhanced in retention thermal stability and color tone.

Meanwhile, the unit of the above end hydroxyl group concentration expressed by "ppm" represents a weight of the end hydroxyl group based on the weight of the aromatic polycarbonate resin. The end hydroxyl group concentration may be measured by colorimetric quantity determination using a titanium tetrachloride/ acetic acid method (the method described in "Macromol. Chem.", 88, 215 (1965) ) .

The aromatic polycarbonate resin used in the present invention may include resins comprising a polycarbonate resin solely (which is not particularly limited to those resins comprising one kind of polycarbonate resin solely, but is intended to involve a mixture of plural kinds of polycarbonate resins which are different in monomer composition or molecular weight from each other), an alloy (mixture) of the aromatic polycarbonate resin and the other thermoplastic resin (hereinafter referred to merely as "other resin"), as well as copolymers comprising a polycarbonate resin as a main component such as copolymers of the polycarbonate resin, for example, with a siloxane structure-containing oligomer

or polymer which is used for the purpose of further enhancing the flame retardancy aimed by the present invention.

Examples of the other resin include thermoplastic polyester resins such as polyethylene terephthalate resin, polytrimethylene terephthalate resin and polybutylene terephthalate resin; styrene-based resins such as polystyrene resin, high-impact polystyrene resin (HIPS), acrylonitrile-styrene copolymer (AS resin), acrylonitrile-butadiene-styrene copolymer (ABS resin), acrylonitrile-styrene-acrylic rubber copolymer (ASA resin) and acrylonitrile-ethylene/propylene-based rubber-styrene copolymer (AES resin); polyolefin resins such as polyethylene resin and polypropylene resin; polyamide resins; polyimide resins; polyether imide resins; polyurethane resins; polyphenylene ether resins; polyphenylene sulfide resins; polysulfone resins; and polymethacrylate resins. These other resins may be used in combination of any two or more thereof.

In addition, the aromatic polycarbonate resin used in the present invention may also comprise an aromatic polycarbonate oligomer in order to improve an appearance of a molded product obtained therefrom as well as a fluidity of the resin composition. The viscosity-average molecular weight [Mv] of the aromatic polycarbonate oligomer is preferably 1,500 to 9,500 and more preferably 2,000 to 9,000. The aromatic polycarbonate oligomer is preferably used in an amount of not more than 30% by weight based on the weight of the aromatic polycarbonate resin.

In the case where the aromatic polycarbonate resin is in the form of an alloy or a copolymer, the upper limit of the content of the other thermoplastic resin in the alloy or copolymer (content of a constitutional block derived from the other thermoplastic resin in the case of the copolymer) is usually 100 parts by weight, preferably 70 parts by weight, more preferably 60 parts by weight and still more preferably 50 parts by weight based on 100 parts by weight of the aromatic polycarbonate resin.

Further, in the present invention, as the aromatic polycarbonate resin, there may be used not only the virgin resin material, but also those aromatic polycarbonate resins regenerated from used resin products, i.e., so- called material- recycled aromatic polycarbonate resins. Examples of the suitably used resin products include optical recording media such as optical discs, light guide plates, transparent members for vehicles such as automobile window glass, automobile headlamp lenses and windshields, containers such as water bottles, spectacle lenses, and building materials such as sound insulating walls, glass windows and corrugated sheets.

Further, there may also be used specification- nonconforming products and crushed or pulverized products obtained from sprues and runners as well as pellets obtained by melting these products. The amount of the regenerated aromatic polycarbonate resin used is usually not more than 80% by weight and preferably not more than 50% by weight based on the weight of the aromatic polycarbonate resin used in the present invention.

<Metal salt compound>

The non-halogen-based aromatic sulfonic acid metal salt compound used in the present invention is represented by the following general formula (1):

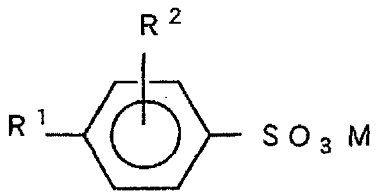

(1)

wherein $R^1$ is a hydrogen atom or an alkyl group having 1 to 10 carbon atoms; $R^2$ is a hydrogen atom, an alkyl group having 1 to 10 carbon atoms, an aralkyl group having 6 to 20 carbon atoms or an aryl group having 5 to 15 carbon atoms; and M is rubidium (Rb), cesium (Cs) or francium (Fr).

The metal element M of the non-halogen-based aromatic sulfonic acid metal salt compound used in the present invention is rubidium (Rb), cesium (Cs) or francium (Fr). Among these metals, preferred are rubidium and cesium, and more preferred is cesium.

The reason that these metal elements are preferred is considered as follows. That is, these metal element as the metal element M of the non-halogen-based aromatic sulfonic acid metal salt compound have a large ionic radius and are capable of forming a strong ionic bond with an organic group owing to a low electronegativity thereof, thereby exhibiting an improved dispersibility in resin compositions. As a result, it is considered that the metal salt compound imparts an excellent flame retardancy to the resin compositions while maintaining good properties of the polycarbonate resin such as transparency.

In the present invention, even though the above-described metal elements are used as the constitutional metal element of the non-halogen-based aromatic sulfonic acid metal salt compound, when a substituent group having an

excessively large number of carbon atoms is bonded to an aromatic ring of an aromatic sulfonic acid moiety of the compound, the resulting resin composition may fail to exhibit a good flame retardancy and also tends to be deteriorated in hue thereof. Therefore, in the present invention, it is important to use the non-halogen-based aromatic sulfonic acid metal salt compound having both the specific aromatic sulfonic acid moiety structure and the specific metal element.

In the above general formula (1), $R^1$ is a hydrogen atom or an alkyl group having 1 to 10 carbon atoms. Among them, preferred are those compounds comprising a substituent group having a less number of carbon atoms as $R^1$, more specifically an alkyl group having 1 to 10 carbon atoms, which is bonded to the p-position of the aromatic ring relative to the sulfonic acid group. Examples of $R^1$ include a methyl group, an ethyl group, a propyl group, a butyl group and an octyl group. In particular, in the case where $R^1$ is an alkyl group, the carbon number thereof is usually 1 to 5, preferably 1 to 3 and more preferably 1 (i.e., methyl).

The non-halogen-based aromatic sulfonic acid metal salt compound represented by the above general formula (1) which is used in the present invention may also comprise $R^2$ as a substituent group bonded to an aromatic ring thereof in addition to $R^1$. The group $R^2$ represents a hydrogen atom, an alkyl group having 1 to 7 carbon atoms, an aralkyl group having 6 to 20 carbon atoms or an aryl group having 5 to 15 carbon atoms.

Specific examples of the alkyl group as $R^2$ include the same groups as exemplified as $R^1$. Examples of the aralkyl group include those groups obtained by replacing a part of hydrogen atoms of these alkyl groups with an aryl group. Examples of the aryl group include a substituted or unsubstituted phenyl group and a substituted or unsubstituted naphthyl group. Meanwhile, these aralkyl groups and aryl groups may comprise a hetero atom.

In the non-halogen-based aromatic sulfonic acid metal salt compound used in the present invention, it is preferred that $R^1$ be an alkyl group having 1 to 10 carbon atoms, and $R^2$ be a hydrogen atom. The carbon number of $R^1$ is usually 1 to 5, preferably 1 to 3 and more preferably 1 (i.e., methyl).

Examples of the non- halogen- based aromatic sulfonic acid metal salt compound used in the present invention include those metal salt compounds of each of rubidium, cesium and francium which comprise an aromatic sulfonic acid moiety derived from benzenesulfonic acid; toluenesulfonic acids such as 2- toluenesulfonic acid, 3- toluenesulfonic acid and 4- toluenesulfonic acid; xylene- 4- sulfonic acids such as o- xylene- 4- sulfonic acid and m- xylene- 4- sulfonic acid; 3- nitrobenzenesulfonic acid; p- styrenesulfonic acid, as well as anhydrides or hydrates of these aromatic sulfonic acids.

Among them, the aromatic sulfonic acid moiety of these metal salt compounds is preferably benzenesulfonic acid or toluenesulfonic acids, and the metal thereof is preferably cesium. In particular, as the non-halogen-based aromatic sulfonic acid metal salt compound used in the present invention, preferred are cesium benzenesulfonate and cesium toluenesulfonate, and more preferred is cesium 4-toluenesulfonate.

The pH of the non-halogen-based aromatic sulfonic acid metal salt compound used in the present invention is not particularly limited, and is usually 4 to 8, preferably 5 to 7 and more preferably 5.5 to 6.8.

The content of the non-halogen-based aromatic sulfonic acid metal salt compound used in the present invention is usually 0.001 to 0.5 parts by weight, preferably 0.01 to 0.3 parts by weight and more preferably 0.02 to 0.2 parts by weight based on 100 parts by weight of the aromatic polycarbonate resin. When the content of the metal salt compound is less than 0.001 parts by weight, the resulting composition tends to be insufficient in flame-retarding effect. When the content of the metal salt compound is more than 0.5 parts by weight, not only the effect obtained by addition of the metal salt compound tends to be no longer enhanced, but also the resulting composition tends to suffer from deteriorated thermal properties and mechanical properties owing to decrease in molecular weight, as well as deteriorated flame retardancy in some worse cases.

<Other components>

The flame-retardant aromatic polycarbonate resin composition may also comprise various conventionally known optional additives for resins, if required, in addition to the above-described other resins, unless the addition of these additives gives any adverse influence on various properties of the resin composition as the aimed effects of the present invention such as flame retardancy, transparency, hue and thermal stability.

Examples of the additives for resins include thermal stabilizers, antioxidants, release agents, ultraviolet absorbers, dyes and pigments, flame retardants, anti-dripping agents, antistatic agents, antifogging agents, lubricants, anti-blocking agents, fluidity improvers, plasticizers, dispersants and antibacterial agents. These additives may be used in combination of any two or more thereof at any optional proportion. The additives suitably used in the thermoplastic resin composition are more specifically explained below.

Examples of the thermal stabilizers include phosphorus-based compounds. As the phosphorus-based compounds, there may be used conventionally known optional compounds. Examples of the phosphorus-based compounds include oxo acids of phosphorus such as phosphoric acid, phosphonic acid, phosphorous acid, phosphinic acid and polyphosphoric acid; acid pyrophosphoric acid metal salts such as acid sodium pyrophosphate, acid potassium pyrophosphate and calcium pyrophosphate; phosphoric acid salts of metals of Group 1 or Group 2B such as potassium phosphate, sodium phosphate, cesium phosphate and zinc phosphate; organic phosphate compounds; organic phosphite

compounds; and organic phosphonite compounds.

Among these phosphorus-based compounds, preferred are the organic phosphate compounds represented by the following general formula (6) and/or the organic phosphite compounds represented by the following general formula (7).

$$O{=}P\ (OH)_m\ (OR)_{3-m} \qquad (6)$$

wherein R is an alkyl group or an aryl group, and a plurality of R groups, if any, may be the same or different from each other; and m is an integer of 0 to 2.

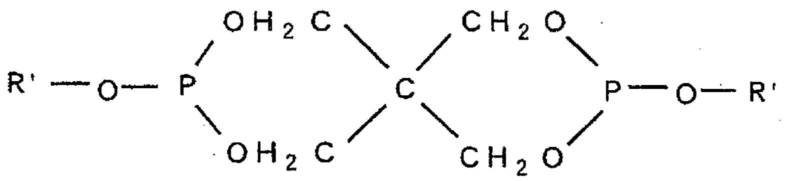

(7)

wherein two R' groups are respectively an alky group or an aryl group and may be the same or different from each other.

In the general formula (6), R is preferably an alkyl group having 1 to 30 carbon atoms or an aryl group having 6 to 30 carbon atoms. Among these groups, more preferred is an alkyl group having 2 to 25 carbon atoms. The integer m is preferably 1 or 2.

In the general formula (7) , R' is preferably an alkyl group having 1 to 30 carbon atoms or an aryl group having 6 to 30 carbon atoms. Specific examples of the organic phosphite represented by the general formula (7) include distearyl pentaerythritol diphosphite, bis (2, 4- di- tert- butylphenyl) pentaerythritol diphosphite and bis (2, 6- di- tert- butyl- 4- methylphenyl) pentaerythritol diphosphite.

The content of the phosphorus-based compound in the resin composition is usually 0.001 to 1 part by weight, preferably 0.01 to 0.7 parts by weight and more preferably 0.03 to 0.5 parts by weight based on 100 parts by weight of the aromatic polycarbonate resin.

Examples of the antioxidant include hindered phenol- based antioxidants. Specific examples of the hindered phenol- based antioxidants include pentaerythritol tetrakis [3- (3, 5- di- tert- butyl- 4- hydroxyphenyl) propionate] , octadecyl- 3- (3, 5- di- tert- butyl- 4- hydroxyphenyl) propionate, thiodiethylenebis [3- (3, 5- di- tert- butyl- 4- hydroxyphenyl) propionate] , N, N'- hexane- 1, 6- diylbis [3- (3, 5- di- tert- butyl- 4- hydroxyphenyl) propionamide] , 2, 4- dimethyl- 6- (1- methylpentadecyl) phenol, diethyl[[3, 5- bis (1, 1- dimethylethyl)- 4- hydroxyphenyl] methyl] phosphate, 3, 3', 3", 5, 5', 5"- hexa- tert- butyl- a, a', a"- (mesitylene- 2, 4, 6- triyl) tri- p- cresol, 4, 6- bis (octylthiomethyl)- o- cresol, ethylenebis (oxyethylene) bis [3- (5- tert- butyl- 4- hydroxy- m- tolyl) propionate] , hexamethylenebis [3- (3, 5- di- tert- butyl- 4- hydroxyphenyl) propionate] , 1, 3, 5- tris (3, 5- di- tert- butyl- 4- hydroxybenzyl)- 1, 3, 5- triazine- 2, 4, 6- (1H, 3H, 5H)- trione and 2, 6- di- tert- butyl- 4- (4, 6- bis (octylthio)- 1, 3, 5- triazine- 2- ylamino) phenol. These hindered phenol- based antioxidants may be used in combination of any two or more thereof.

Among these hindered phenol- based antioxidants, preferred are pentaerythritol tetrakis [3- (3, 5- di- tert- butyl- 4- hydroxyphenyl) propionate] and octadecyl- 3- (3, 5- di- tert- butyl- 4- hydroxyphenyl) propionate. The above- described two phenol- based antioxidants are respectively commercially available under tradenames "IRGANOX 1010" and "IRGANOX 1076" from Ciba Specialty Chemicals, Corp.

The content of the antioxidant in the resin composition is usually 0.001 to 1 part by weight and preferably 0.01 to 0.5 parts by weight on the basis of 100 parts by weight of the aromatic polycarbonate resin. When the content of the antioxidant is too small, the effect of the antioxidant added tends to be insufficient. On the contrary, even when the content of the antioxidant is too large, the effect of the antioxidant tends to be no longer increased, resulting in economical disadvantage.

As the release agent, there may be used, for example, aliphatic carboxylic acids, esters of the aliphatic carboxylic acids with alcohols, aliphatic hydrocarbon compounds having a number-average molecular weight of 200 to 15000, and polysiloxane-based silicone oils.

Examples of the aliphatic carboxylic acids include saturated or unsaturated, straight-chain or cyclic, aliphatic mono-, di- or tri-carboxylic acids. Among these aliphatic carboxylic acids, preferred are mono- or dicarboxylic acids having 6 to 36 carbon atoms, and more preferred are aliphatic saturated monocarboxylic acids having 6 to 36 carbon atoms. Specific examples of the aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanoic acid, adipic acid and azelaic acid.

As the aliphatic carboxylic acids of the aliphatic carboxylic esters, there may be used the same aliphatic carboxylic acids as described above. Examples of the alcohol moiety of the esters include those derived from saturated or unsaturated, straight-chain or cyclic, monohydric or polyhydric alcohols. These alcohols may comprise a substituent group such as a fluorine atom and an aryl group. In particular, among these alcohols, preferred are monohydric or polyhydric saturated alcohols having not more than 30 carbon atoms, and more preferred are saturated aliphatic monohydric or polyhydric alcohols having not more than 30 carbon atoms.

Specific examples of the alcohols include octanol, decanol, dodecanol, stearyl alcohol, behenyl alcohol, ethylene glycol, diethylene glycol, glycerol, pentaerythritol, 2, 2- dihydroxyperfluoropropanol, neopentyl glycol, ditrimethylol propane and dipentaerythritol. Meanwhile, the above aliphatic carboxylic esters may comprise the aliphatic carboxylic acids and/or the alcohols as impurities, and further may be in the form of a mixture comprising a plurality of the aliphatic carboxylic esters.

Specific examples of the aliphatic carboxylic esters include beeswax (mixture comprising myricyl palmitate as a main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate and pentaerythritol tetrastearate.

Examples of the aliphatic hydrocarbons having a number-average molecular weight of 200 to 15000 include liquid paraffins, paraffin waxes, micro waxes, polyethylene waxes, Fischer-Tropsch waxes and $\alpha$-olefin oligomers having 3 to 12 carbon atoms. The aliphatic hydrocarbons as used therein may also involve alicyclic hydrocarbons. In addition, these hydrocarbon compounds may be partially oxidized.

Among these aliphatic hydrocarbons, preferred are paraffin waxes, polyethylene waxes and partially oxidized products of polyethylene waxes, and more preferred are paraffin waxes and polyethylene waxes. The number-average molecular weight of the aliphatic hydrocarbons is preferably 200 to 5000. These aliphatic hydrocarbons may be in the form of a single substance or a mixture of various substances which are different in constitutional components and molecular weight from each other as long as the content of the main component lies within the above-specified range.

Examples of the polysiloxane-based silicone oils include dimethyl silicone oils, phenylmethyl silicone oils, diphenyl silicone oils and fluorinated alkyl silicones. These silicone oils may be used in combination of any two or more thereof at any optional proportion.

In the present invention, the content of the release agent in the resin composition is usually 0.001 to 2 parts by weight and preferably 0.01 to 1 part by weight on the basis of 100 parts by weight of the aromatic polycarbonate resin. When the content of the release agent is too small, the resulting resin composition may fail to exhibit a sufficient releasing effect. On the contrary, when the content of the release agent is too large, there tend to arise problems such as deterioration in hydrolysis resistance of the aromatic polycarbonate resin and contamination of a mold used upon injection molding.

Specific examples of the ultraviolet absorbers include inorganic ultraviolet absorbers such as cerium oxide and zinc oxide; and organic ultraviolet absorbers such as benzotriazole compounds, benzophenone compounds and triazine compounds. Among these ultraviolet absorbers, preferred are the organic ultraviolet absorbers, and more preferred is at least one compound selected from the group consisting of benzotriazole compounds, 2- (4, 6- diphenyl- 1, 3, 5- triazine- 2- yl)- 5- [(hexyl) oxy]- phenol, 2- [4, 6- bis (2, 4- dimethylphenyl)- 1, 3, 5- triazine- 2- yl)- 5- (octyloxy)- phenol, 2, 2'- (1, 4- phenylene) bis [4H- 3, 1- benzoxazine- 4- one] , and [(4- methoxyphenyl)- methylene]- propanedioic acid dimethyl ester.

Specific examples of the benzotriazole compounds include a condensed product of methyl- 3- [3- tert- butyl- 5- (2H- benzotriazole- 2- yl)- 4- hydroxyphenyl] propionate and polyethylene glycol. Specific examples of the other benzotriazole compounds include 2- bis (5- methyl- 2- hydroxyphenyl) benzotriazole, 2- (3, 5- di- tert- butyl- 2- hydroxyphenyl) benzotriazole, 2- (3', 5'- di- tert- butyl- 2'- hydroxyphenyl)- 5- chlorobenzotriazole, 2- (3- tert- butyl- 5- methyl- 2- hydroxyphenyl)- 5- chlorobenzotriazole, 2- (2'- hydroxy- 5'- tert- octylphenyl) benzotriazole, 2- (3, 5- di- tert- amy1- 2- hydroxyphenyl) benzotriazole, 2- [2- hydroxy- 3, 5- bis ($\alpha$, $\alpha$- dimetylbenzyl) phenyl]- 2H- benzotriazole, 2, 2'- methylenebis [4- (1, 1, 3, 3- tetramethylbutyl)- 6- (2N- benzotriazole- 2- yl) phenol] , and a condensed product of [methyl- 3- [3- tert- butyl- 5- (2H- benzotriazole- 2- yl)- 4- hydroxyphenyl] propionate and polyethylene glycol. These benzotriazole compounds may be used in combination of any two or more thereof at any optional proportion.

Among these benzotriazole compounds, preferred are 2- (2'- hydroxy- 5'- tert- octylphenyl) benzotriazole, 2- [2- hydroxy- 3, 5- bis ($\alpha$, $\alpha$- dimetylbenzyl) phenyl]- 2H- benzotriazole, 2- (4, 6- diphenyl- 1, 3, 5- triazine- 2- yl)- 5- [(hexyl) oxy]- phenol, 2- [4, 6- bis (2, 4- dimethylphenyl)- 1, 3, 5- triazine- 2- yl)- 5- (octyloxy)- phenol and 2, 2'- methylene- bis [4- (1, 1, 3, 3- tetramethylbutyl)- 6- (2N- benzotriazole- 2- yl) phenol] .

In the present invention, the content of the ultraviolet absorber in the resin composition is usually 0.01 to 3 parts by weight and preferably 0.1 to 1 part by weight on the basis of 100 parts by weight of the aromatic polycarbonate resin. When the content of the ultraviolet absorber is too small, the effect of improving a weather resistance of the resin composition tends to be insufficient. On the contrary, when the content of the ultraviolet absorber is too large, there tend to arise problems such as mold deposits.

As the dye and pigment, there may be used inorganic pigments, organic pigments and organic dyes. Examples of the inorganic pigments include carbon blacks; sulfide-based pigments such as cadmium red and cadmium yellow; silicate-based pigments such as ultramarine blue; oxide-based pigments such as titanium oxide, zinc white, red iron oxide, chromium oxide, iron black, titanium yellow, zinc/iron-based brown, titanium/cobalt-based green, cobalt green, cobalt blue, copper/chromium-based black and copper/iron-based black; chromate-based pigments such as chrome yellow and molybdate orange; and ferrocyanide-based pigments such as Prussian blue.

Examples of the organic pigment and organic dyes include phthalocyanine-based dyes and pigments such as copper phthalocyanine blue and copper phthalocyanine green; azo-based dyes and pigments such as nickel azo yellow; condensed polycyclic dyes and pigments such as thioindigo-based compounds, perynone-based compounds, perylene-based compounds, quinacridone-based compounds, dioxazine-based compounds, isoindolinone-based compounds and quinaphthalone-based compounds; and anthraquinone-based, heterocyclic and methyl-based dyes and pigments.

These dyes and pigments may be used in combination of any two or more thereof at any optional proportion. Among these dyes and pigments, from the viewpoint of a good thermal stability, preferred are titanium oxide, carbon blacks, cyanine-based compounds, quinoline-based compounds, anthraquinone-based compounds and phthalocyanine-based compounds.

The content of the dye and pigment in the resin composition is usually not more than 5 parts by weight, preferably not more than 3 parts by weight and more preferably not more than 2 parts by weight on the basis of 100 parts by weight of the aromatic polycarbonate resin. When the content of the dye and pigment is too large, the resultant resin composition tend to be considerably deteriorated in transparency or impact resistance.

As the flame retardant, there may be used any optional conventionally known flame retardants. Examples of the flame retardant include halogen-based flame retardants such as polycarbonates of halogenated bisphenol A, brominated bisphenol-based epoxy resins, brominated bisphenol-based phenoxy resins and brominated polystyrenes; phosphate-based flame retardants; organic metal salt-based flame retardants; silicone-based flame retardants; and inorganic compound-based flame retardants (flame-retarding assistants).

These flame retardants may be used in combination of any two or more thereof at any optional proportion. Among these flame retardants, preferred are organic metal salt-based flame retardants having an extremely low possibility of environmental pollution, silicone-based flame retardants and inorganic compound-based flame retardants (flame-retarding assistants).

Examples of the organic metal salt- based flame retardants include dipotassium diphenyl sulfone- 3, 3'- disulfonate, potassium diphenyl sulfone- 3- sulfonate, sodium benzenesulfonate, sodium (poly) styrenesulfonate, sodium p-toluenesulfonate, sodium (branched) dodecylbenzenesulfonate, potassium benzenesulfonate, potassium styrenesulfonate, potassium (poly) styrenesulfonate, potassium p- toluenesulfonate, potassium (branched) dodecylbenzenesulfonate and potassium perfluorobutanesulfonate.

Examples of the inorganic compound-based flame retardants (flame-retarding assistants) include talc, mica, kaolin, clay, silica powder, fumed silica and glass flakes.

In the present invention, the content of the flame retardant in the resin composition is usually 0.0001 to 30 parts by weight, preferably 0.01 to 25 parts by weight and more preferably 0.1 to 20 parts by weight on the basis of 100 parts by weight of the aromatic polycarbonate resin. When the content of the flame retardant is too small, the resultant resin composition tend to be insufficient in flame retardancy. On the contrary, when the content of the flame retardant is too large, the resultant resin composition tend to be considerably deteriorated in transparency or heat resistance.

As the anti-dripping agent, there may be used any optional conventionally known anti-dripping agents. Among them, preferred anti-dripping agents are fluoroolefin resins. The fluoroolefin resins are usually in the form of a polymer or copolymer having a fluoroethylene structure. Examples of the polymer or copolymer having a fluoroethylene structure include difluoroethylene resins, tetrafluoroethylene resins and tetrafluoroethylene/hexafluoroethylene copolymer resins. Among these resins, preferred are tetrafluoroethylene resins. The fluoroethylene resins preferably have a fibril-forming property.

Examples of the fluoroethylene resins having a fibril-forming property which are usable in the present invention include "Teflon (registered trademark) 6J" produced by Mitsui-DuPont Fluorochemical Co., Ltd., and "POLYFLON F201L" and "POLYFRON F103" both produced by Daikin Kagaku Kogyo Co., Ltd. Examples of an aqueous dispersion of the fluoroethylene resins include "Teflon (registered trademark) 30J" produced by Mitsui-DuPont Fluorochemical Co., Ltd., and "FLUON D-1" produced by Daikin Kagaku Kogyo Co., Ltd. Further, in the present invention, there may also be used fluoroethylene polymers having a multilayer structure which are obtained by polymerizing a vinyl-based monomer. Specific examples of the fluoroethylene polymers include "METABRENE A-3800" produced by Mitsubishi Rayon Co., Ltd.

In the present invention, the content of the anti-dripping agent is 0.01 to 3 parts by weight on the basis of 100 parts by weight of the polycarbonate resin. When the content of the anti-dripping agent is too small, the resulting polycarbonate resin composition tends to be insufficient in flame retardancy. On the contrary, when the content of the anti-dripping agent is too large, the resulting polycarbonate resin composition tends to be deteriorated in transparency or heat resistance, or the resulting polycarbonate resin molded product tends to be deteriorated in appearance or mechanical

strength.

Therefore, the content of the anti- dripping agent used in the resin composition is preferably 0.01 to 2 parts by weight, more preferably 0.02 to 0.5 parts by weight and still more preferably 0.05 to 0.3 parts by weight on the basis of 100 parts by weight of the polycarbonate resin. In particular, from the viewpoint of maintaining a good transparency, the content of the anti- dripping agent is further still more preferably 0.075 to 0.2 parts by weight.

<Production of flame-retardant aromatic polycarbonate resin composition>

The flame-retardant aromatic polycarbonate resin composition is characterized by incorporating a specific amount of the above-described non-halogen-based aromatic sulfonic acid metal salt compound in the aromatic polycarbonate resin. The process for producing the flame-retardant aromatic polycarbonate resin composition is not particularly limited, and may be appropriately selected and determined from conventionally known optional methods for production of resin compositions.

The flame-retardant aromatic polycarbonate resin composition may be produced, for example, by the following method. That is, the above aromatic polycarbonate and the metal salt compound component are previously mixed, if required, together with other additive components, using various mixers such as a tumbler and a Henschel mixer, and then the resulting mixture is melt-kneaded using a Banbury mixer, a roll, a Brabender, a single-screw kneading extruder, a twin-screw kneading extruder, a kneader, etc.

Alternatively, the respective components may be directly fed to the extruder without being previously mixed, thereby producing the resin composition. Further, after previously mixing only a part of the components, the resulting mixture may be fed to the extruder through a feeder, and then melt- kneaded with remaining other components therein to produce the resin composition. In addition, the resin composition obtained by previously mixing only a part of the components, feeding the mixture to the extruder and melt- kneading the mixture therein may be used as a master batch and melt- kneaded again with the other components to produce the resin composition.

Among these method, in order to produce the flame-retardant aromatic polycarbonate resin composition, there is preferably used the method of producing the resin composition in which the above non-halogen-based aromatic sulfonic acid metal salt compound is previously mixed with the resin component to prepare a master batch, because the dispersibility as well as the workability upon extrusion can be enhanced. Also, form the viewpoint of enhancing a dispersibility of the non-halogen-based aromatic sulfonic acid metal salt compound in the resin composition, it is preferred that the non-halogen-based aromatic sulfonic acid metal salt compound is previously dissolved in a solvent such as water and an organic solvent, and then the resulting solution is kneaded with the resin component.

<Production of resin molded product>

A flame-retardant aromatic polycarbonate resin molded product may be produced by molding the above-described flame-retardant aromatic polycarbonate resin composition by any conventionally known optional resin molding methods. The process for producing the resin molded product is not particularly limited, and the resin molded product may be produced by various molding methods ordinarily used for thermoplastic resins.

Examples of the method for producing the resin molded product include an ordinary injection molding method, an ultrahigh-speed injection molding method, an injection compression molding method, a two-color molding method, a blow molding method such as a gas-assisted blow molding method, a molding method using an insulated runner mold, a molding method using a rapidly heating mold, an expansion molding method (including supercritical fluid), an insert molding method, an IMC (in-mold coating molding) method, an extrusion molding method, a sheet molding method, a thermoforming method, a rotational molding method, a lamination molding method and a press molding method. In addition, there may also be adopted such a molding method using a hot runner.

In particular, the flame-retardant aromatic polycarbonate resin molded product which has excellent transparency and flame retardancy, can more remarkably exhibit its effects when formed into a sheet member. The sheet member is intended to include general resin molded products having a small thickness, and may generally involve thin films rather than sheets, as well as thick-wall plate-shaped molded products. The sheet member usually represents a thin-wall or plate-shaped resin molded product having a thickness of about 0.3 to 10 mm.

From the viewpoints of reduction in environmental burden such as less amounts of wastes and low costs, upon producing the resin molded product from the resin composition, the virgin material may be mixed with recycled raw materials such as nonconforming products, sprues, runners and used products in order to realize recycling of materials (so-called material-recycling).

In this case, the recycled raw materials used are preferably crushed or pulverized to prevent occurrence of defects upon producing the molded product. The content of the recycled raw materials is usually not more than 70% by weight, preferably not more than 50% by weight and more preferably not more than 30% by weight based on a total amount of the recycled raw materials and the virgin material.

EXAMPLES

The present invention is described in more detail by the following Examples. In the followings, the "part(s)" means "part(s) by weight".

Examples 1 to 3 and Comparative Examples 1 to 6:

<Production of resin pellets>

The respective components as shown in Table 2 were blended at the proportions (weight ratios) shown in Table 3 and mixed with each other for 20 min using a tumbler mixer. Then, the resulting mixture was fed to a 40 mmϕ single-screw extruder "VS-40" with one vent manufactured by Tanabe Seiki Co., Ltd., and kneaded therein at 300°C. Then, the molten resin was extruded from the extruder into strands, rapidly cooled in a water vessel, and formed into pellets using a pelletizer. Meanwhile, the amounts of the metal salts 1 to 9 as shown in Table 2 were controlled such that each metal salt was added in an amount of 3.0 mmol per 1000 g of the polycarbonate resin composition.

(Production of test piece for UL test)

The pellets obtained by the above-described production method were dried at 120°C for 5 hr and then injection-molded at a cylinder temperature of 290°C and a mold temperature of 80°C for a molding cycle time of 30 sec using an injection molding machine "J50-EP Type" manufactured by Nippon Seikosho Co., Ltd., thereby producing a test piece having a length of 125 mm, a width of 13 mm and a thickness of 3.1 mm.

(Production of plate-shaped molded product)

The pellets obtained by the above-described production method were dried at 120°C for 5 hr and then injection-molded at a cylinder temperature of 290°C and a mold temperature of 110°C for a molding cycle time of 60 sec using an injection molding machine "IS150EN" manufactured by Toshiba Kikai Co., Ltd., thereby producing a plate-shaped molded product having a length of 150 mm, a width of 150 mm and a thickness of 6 mm.

Next, evaluation methods of the respective aromatic polycarbonate resins are explained.

(Flammability test)

Five UL test samples (test pieces) for each composition were prepared, and allowed to stand for humidity conditioning in a thermostatic chamber at a temperature of 23°C and a humidity of 50% for 48 hr to thereby evaluate a flame retardancy thereof according to UL 94 test (flammability test of plastic materials for equipment parts) prescribed by UL.

The UL 94 test is a method for evaluating a flame retardancy on the basis of an afterflaming time and a dripping property of a test piece as determined after contacting the test piece having a predetermined size which is held in a vertical direction with flame of a burner for 10 sec as well as an afterflaming time and occurrence of dripping of the test piece as determined after contacting the test piece again with the flame subsequent to flameout of the 1st flame-contact test. The ratings V-0 to V-2 for flame retardancy are required to meet criteria as shown in the following Table 1.

Table 1

| | V-0 | V-1 | V-2 |
|---|---|---|---|
| Afterflaming time for each test piece (sum of afterflaming times of 1st and 2nd flame-contact tests) | 10 sec or less | 30 sec or less | 30 sec or less |
| Whole afterflaming time of five test pieces (total afterflaming time of 1st to 10th flame-contact tests) | 50 sec or less | 250 sec or less | 250 sec or less |
| Firing of cotton due to dripping | Not occurred | Not occurred | Occurred |

The afterflaming time as used herein means a time period during which flaming of the test piece is kept continued after being spaced apart from a firing source, and represents the time required until flame-out on the test piece (including separation of the flaming portion due to dripping). The cotton firing due to dripping is determined by examining whether

or not a cotton as a marking which is placed about 300 mm below a lower end of the test piece is fired by drip of the test piece.

When any one of the five test pieces fails to satisfy the above criteria, the resin composition thereof is evaluated as being NR (not rated) which is incapable of meeting the rating V-2. Meanwhile, a sum of two afterflaming times obtained from the two flame-contact tests is given as a total flaming time, and the longest afterflaming time is shown as a maximum flaming time in Table 3.

(Transparency)

The haze of a plate-shaped molded product having a thickness of 6 mm as a test piece was measured using a haze meter "NDH-2000 Model" manufactured by Nippon Denshoku Kogyo Co., Ltd., according to JIS K-7105. The haze is the value used as a scale for evaluation of turbidity of a resin, and a larger haze value indicates a higher transparency.

(Hue)

The hue of a plate-shaped molded product having a thickness of 6.3 mm as a test piece was measured using a spectrometric colorimeter "SE-2000 Model" manufactured by Nippon Denshoku Kogyo Co., Ltd., by a transmission method according to JIS Z-8722. Meanwhile, the hue was evaluated by YI value (yellow index). The YI value is the value used as a scale for evaluation of discoloration of a resin upon subjected to thermal processing, and a smaller YI value indicates a less yellowness.

(Wet-heat hue stability)

A plate-shaped molded product having a thickness of 6.3 mm was allowed to stand at 120°C under 100% RH for 2 hr using a pressure cooker (PCT) to evaluate a hue thereof and further evaluate a degree of discoloration thereof by the same method.

Table 2

| | Abb. | Sample |
|---|---|---|
| Polycarbonate resin | PC1 | "IUPILON (registered trademark) E=2000N" produced by Mitsubishi Engineering-Plastics Corporation. (Mv: 28000) |
| | PC2 | "NOVAREX (registered trademark) M7027U" produced by Mitsubishi Engineering-Plastics Corporation. (Mv: 26500) |
| Metal salt | Metal salt 1 | Cesium benzenesulfonate |
| | | "MEC-141" produced by Takemoto Yushi Co., Ltd. (molecular weight: 290.07) |
| | Metal salt 2 | Cesium p-toluenesulfonate |
| | | "MEC-142" produced by Takemoto Yushi Co., Ltd. (molecular weight: 304.09) |
| | Metal salt 3 | Sodium p-toluenesulfonate |
| | | Produced by Wako Junyaku Co., Ltd. (molecular weight: 194.18) |
| | Metal salt 4 | Potassium p-toluenesulfonate |
| | | "MEC-140" produced by Takemoto Yushi Co., Ltd. (molecular weight: 210.29) |
| | Metal salt 5 | Cesium branched dodecylbenzenesulfonate |
| | | "MEC-135" produced by Takemoto Yushi Co., Ltd. (molecular weight: 458.39) |

Table 3

| | | Example 1 | Example 2 | Comparative Example 1 |
|---|---|---|---|---|
| PC (weight part) | PC1 | 4.913 | 4.909 | 5 |
| | PC2 | 95 | 95 | 95 |
| Metal salt (weight part) | 1 | 0.087 | | |
| | 2 | | 0.091 | |
| | 3 | | | |
| | 4 | | | |
| | 5 | | | |
| Total flaming time (sec) | | 32 | 32 | 378 |
| Maximum flaming time (sec) | | 7 | 5 | 120 |
| Flame retardancy | | | | |
| Number of dripped test pieces | 1st flame-contact | 0 | 0 | 4 |
| | 2nd flame-contact | 0 | 0 | 5 |
| Evaluation | | V-0 | V-0 | NR |
| Hue | YI | 3.14 | 1.93 | 1.72 |
| | YI after PCT treatment | 7.14 | 3.84 | 1.9 |
| | ΔYI | 4 | 1.91 | 0.18 |
| Transparency | Haze (%) | 1.52 | 0.79 | 0.39 |
| | Total light transmittance (%) | 85.16 | 85.6 | 85.92 |

Table 3 (Continued)

| | | Comparative Examples | | |
|---|---|---|---|---|
| | | 2 | 3 | 4 |
| PC (weight part) | PC1 | 4.942 | 4.937 | 4.862 |
| | PC2 | 95 | 95 | 95 |
| Metal salt (weight part) | 1 | | | |
| | 2 | | | |
| | 3 | 0.058 | | |
| | 4 | | 0.063 | |
| | 5 | | | 0.138 |
| Total flaming time (sec) | | 25 | 23 | 44 |
| Maximum flaming time | | 5 | 6 | 14 |
| Flame retardancy | | | | |
| Number of dripped test pieces | 1st flame-contact | 0 | 0 | 0 |
| | 2nd flame-contact | 0 | 0 | 5 |
| Evaluation | | V-0 | V-0 | V-2 |
| Hue | YI | 15.24 | 24.13 | 7.06 |
| | YI after PCT treatment | 31.64 | 31.91 | 8.58 |
| | ΔYI | 16.4 | 7.78 | 1.53 |
| Transparency | Haze (%) | 22.84 | 38.49 | 0.9 |
| | Total light transmittance (%) | 82.03 | 83.03 | 84.49 |

As is apparent from the results shown in Table 3, although the test pieces used in Examples of the present invention had a thickness larger than ordinarily (about 3 mm), in particular, a thickness as large as 6.3 mm, it was confirmed from the results thereof that the aromatic polycarbonate resin molded products made flame-retardant by use of the present invention exhibited sufficient transparency, flame retardancy and wetheat resistance.

Even when compared with the results of the aromatic polycarbonate resin using no additives (Comparative Example 1), it was confirmed that the aromatic polycarbonate resin molded products that are made flame-retardant by use of the present invention had a sufficient transparency. In addition, even when compared with those using the conventional flame retardants (Comparative Examples 3 and 4), it was apparently recognized that the aromatic polycarbonate resin molded products that are made flame-retardant by use of the present invention exhibited a sufficient flame retardancy.

## Claims

1. Use of a non-halogen-based aromatic sulfonic acid metal salt compound represented by the following formula (1):

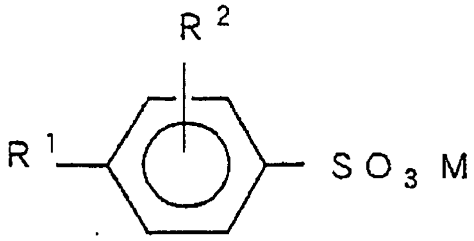

(1)

wherein $R^1$ is a hydrogen atom or an alkyl group having 1 to 10 carbon atoms; $R^2$ is a hydrogen atom, an alkyl group having 1 to 7 carbon atoms, an arylalkyl group having 6 to 20 carbon atoms or an aryl group having 5 to 15 carbon atoms; and M is rubidium (Rb), cesium (Cs) or francium (Fr),
for flame-retarding an aromatic polycarbonate resin composition, wherein 0.001 to 0.5 parts by weight of the non-halogen-based aromatic sulfonic acid metal salt compound are added to 100 parts by weight of an aromatic polycarbonate resin.

**2.** Use according to claim 1, wherein M is cesium.

**3.** Use according to claim 1, wherein the non-halogen-based aromatic sulfonic acid metal salt compound is cesium benzenesulfonate and/or cesium p-toluenesulfonate.

**4.** Use according to claim 1, wherein the polycarbonate resin composition has a rating of V-0 in the UL 94 test.

**Patentansprüche**

**1.** Verwendung einer halogenfreien aromatischen Sulfonsäure-Metallsalzverbindung der nachstehenden Formel (1):

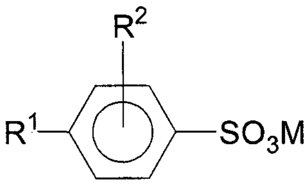

(1)

worin $R^1$ ein Wasserstoffatom oder eine Alkylgruppe mit 1 bis 10 Kohlenstoffatomen ist; $R^2$ ein Wasserstoffatom, eine Alkylgruppe mit 1 bis 7 Kohlenstoffatomen, eine Aralkylgruppe mit 6 bis 20 Kohlenstoffatomen oder eine Arylgruppe mit 5 bis 15 Kohlenstoffatomen ist; und M Rubidium (Rb), Cäsium ’(Cs) oder Francium (Fr) ist,
um einer aromatischen Polycarbonatharz-Zusammensetzung Flammfestigkeit zu verleihen, wobei 0,001 bis 0,5 Gew.-Teile der halogenfreien aromatischen Sulfonsäure-Metallsalzverbindung zu 100 Gew.-Teilen eines aromatischen Polycarbonatharzes zugegeben werden.

**2.** Verwendung gemäss Anspruch 1, wobei M Cäsium ist.

**3.** Verwendung gemäss Anspruch 1, wobei die halogenfreie aromatische Sulfonsäure-Metallsalzverbindung Cäsiumbenzolsulfonat und/oder Cäsium-p-toluolsulfonat ist.

**4.** Verwendung gemäss Anspruch 1, wobei die Polycarbonatharz-Zusammensetzung im UL-94-Test eine Klassifizierung von V-0 aufweist.

**Revendications**

**1.** Utilisation d’un composé de sel métallique d’acide sulfonique aromatique à base de non-halogène représenté par la formule suivante (1) :

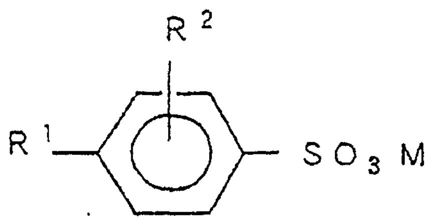

(1)

où $R^1$ est un atome d'hydrogène ou un groupe alkyle ayant 1 à 10 atomes de carbone ; $R^2$ est un atome d'hydrogène, un groupe alkyle ayant 1 à 7 atomes de carbone, un groupe arylalkyle ayant 6 à 20 atomes de carbone ou un groupe aryle ayant 5 à 15 atomes de carbone ; et M est le rubidium (Rb), le césium (Cs) ou le francium (Fr),
pour l'ignifugation d'une composition de résine de polycarbonate aromatique, où 0,001 à 0,5 parties en poids du composé de sel métallique d'acide sulfonique aromatique à base de non-halogène sont ajoutées à 100 parties en poids d'une résine de polycarbonate aromatique.

**2.** Utilisation selon la revendication 1, dans laquelle M est le césium.

**3.** Utilisation selon la revendication 1, dans laquelle le composé de sel métallique d'acide sulfonique aromatique à base de non-halogène est le benzène sulfonate de césium et / ou le p-toluène sulfonate de césium.

**4.** Utilisation selon la revendication 1, dans laquelle la composition de résine de polycarbonate a une notation de V-0 dans le test UL-94.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 47040445 A
- JP 2000169696 A
- JP 2001181493 A
- JP 6306268 A
- JP 2004107372 A
- JP 8259687 A
- JP 8245782 A


### Non-patent literature cited in the description


- **SHIGEHARU ONOGI.** *Rheology for Chemists,* 15-16
- *Macromol. Chem.,* 1965, vol. 88, 215